# EUROPÄISCHE PATENTSCHRIFT

(11) **EP 0 686 102 B1**
(45) Veröffentlichungstag und Bekanntmachung des Hinweises auf die Patenterteilung: **23.10.1996**
(21) Anmeldenummer: 94908262.2
(22) Anmeldetag: 19.02.1994
(51) Int. Cl.: B60Q 1/14

(54) **LENKSTOCKSCHALTER FÜR KRAFTFAHRZEUGE**
STEERING COLUMN SWITCH FOR MOTOR VEHICLES
COMMUTATEUR FIXE A LA COLONNE DE DIRECTION DE VEHICULES A MOTEUR

(30) Priorität: 25.02.1993 DE 4305827
(43) Veröffentlichungstag der Anmeldung: 13.12.1995
(73) Patentinhaber: EATON CONTROLS GmbH & Co. KG, D-55411 Bingen (DE)
(72) Erfinder: DILLY, Günter, D-55424 Münster-Sarmsheim (DE)
(74) Vertreter: Becker, Bernd, Dipl.-Ing.
(86) Internationale Anmeldenummer: DE9400198
(87) Internationale Veröffentlichungsnummer: WO9419210

(56) Entgegenhaltungen:
- DE-A- 2 404 280
- DE-C- 3 433 451
- FR-A- 2 281 852

## Beschreibung

Die Erfindung bezieht sich auf einen Lenkstockschalter für Kraftfahrzeuge, der am Ende eines die Lenksäule aufnehmenden Mantelrohres angeordnet ist und mehrere je aus einem Gehäuse mit elektrischen Anschlüssen und einem Betätigungsorgan bestehende Einzelschalter aufweist, die an einem mit dem Mantelrohr verbundenen Trägergehäuse befestigbar sind, wobei jeder Einzelschalter in tangentialer Richtung gegen die kraft eines federnden Klipsarmes einer lösbaren Klipsverbindung unter dem Zusammenspiel entsprechender Führungsmittel auf das Trägergehäuse aufsteckbar ist.

Bei einem aus der DE-A-2 404 280 bekannten Lenkstockschalter besteht das Trägergehäuse aus einer aus einem steifen Blechteil bestehenden Tragplatte. An den Schaltergehäusen sind auf beiden Seiten Halteschuhe angeformt, die aus Führungsbacken bestehen, die einen der Dicke der Tragplatte entsprechenden Abstand aufweisen, so daß die Führungsbacken an beiden Seiten der Tragplatte anliegen können. Jeder Halteschuh ist seitlich mit einer Verriegelungsspange versehen, die mit einem Verriegelungsstift in eine Durchbrechung der Tragplatte eingreift. Diese Anordnung ist sehr aufwendig, da für die Führung und Halterung des Schaltergehäuses an der Tragplatte besondere Halteschuhe am Schaltergehäuse vorzusehen sind. Das Schaltergehäuse ist durch die Führungsbacken nur in der Richtung parallel zum Mantelrohr gehalten, während in der Richtung, in der bei Schalterbetätigung eine Kraft auf das Schaltergehäuse ausgeübt wird, keine eigentliche Führung vorhanden ist, sondern vielmehr die Verriegelungsstifte in den Durchbrechungen der Tragplatte die, wenn auch geringen, Kräfte aufnehmen müssen. Außerdem ist ein Lösen des Schalters von der Tragplatte ohne Werkzeug nicht möglich.

Weiterhin ist aus der DE-B-2 810 790 ein mehrere Einzelschalter aufnehmender Lenkstockschalter bekannt, bei dem jeder Einzelschalter Arme mit Ansätzen aufweist, die Elemente an einem Trägergehäuse hintergreifen. Hierbei sind die Arme quer zu den seitlichen Flächen der Einzelschalter federnd ausgebildet und an der nach dem Mantelrohr zu liegenden Seite der seitlichen Flächen der Einzelschalter mit diesen verbunden und ihre freien Enden ragen im eingeklipsten Zustand in radialer Richtung über je einen Einzelschalter zwischen sich aufnehmende Flächen des Trägergehäuses hinaus. Schalt- bzw. Verdrehkräfte, die von dem Bediener der Einzelschalter ausgehen, sind von der Klipsverbindung und der Führungsfläche aufzunehmen, wobei die Klipsverbindung keine spielfreie Befestigung garantiert. An jedem Einzelschalter sind mindestens zwei federnde Arme für eine Klipsverbindung vorhanden.

Ferner zeigt die DE-C-3 433 451 einen Lenkstockschalter, der dem Mantelrohr in tangentialer Richtung zugeordnet ist. Dabei ist ein am Mantelrohr befestigter Tragekörper für jedes Schaltergehäuse mit zumindeste einer, das Mantelrohr etwas tangierenden Führungs- bzw. Haltenut versehen. Diese wirken mit zumindest einer entsprechend ausgebildeten, am Schaltergehäuse befindlichen Führungs- bzw. Haltenut zusammen. Zwecks Festlegung des Lenkstockschalters ist parallel zur Längsrichtung der Führungs- bzw. Haltefeder(n) des Tragekörper aus dem Tragekörper ein federnder Klipsarm freigeschnitten, der mit einer starren, am Schaltergehäuse an entsprechender Stelle vorhandenen Rastnase zusammenwirkt. Dieses Dokument bildet den Oberbegriff des Anspruchs 1.

Der Erfindung liegt die Aufgabe zugrunde, einen Lenkstockschalter der eingangs genannten Art zu schaffen, dessen Einzelschalter ohne Zuhilfenahme eines Werkzeuges schnell und leicht mit einfachen Mitteln an dem Trägergehäuse spielfrei und verdrehsicher festgelegt und ebenso schnell und leicht von diesem wieder gelöst werden kann.

Diese Aufgabe wird erfindungsgemäß dadurch gelöst, daß zusätzlich zum Klipsarm eine Feder vorgesehen ist, die in zum Mantelrohr tangentialer Richtung wirkt.

Um eine einfache Anordnung der Feder zu erzielen, ist nach einer vorteilhaften Ausgestaltung der Erfindung die Feder eine Schraubenfeder und in ein Sackloch im Gehäuse des Einzelschalters eingesetzt. Um ein Herausfallen der Feder aus dem Sackboden zu vermeiden, ist bevorzugt am Boden des Sackloches ein sternförmiger Nippel angespritzt, auf den die Feder klemmend aufgesteckt ist. Zweckmäßigerweise steht der Feder im Einzelschalter axial ein stumpfförmiger Ansatz am Trägergehäuse gegenüber und dieser drückt beim Herstellen der Klipsverbindung die Feder zusammen.

Nach einer vorteilhaften Weiterbildung der Erfindung weist der federnde Klipsarm der Klipsverbindung eine Klipsnase auf, die hörbar hinter eine Schulter eines Führungssteges am Trägergehäuse einrastet. So ergibt sich eine zuverlässig arbeitende Klipsverbindung, deren ordnungsgemäßer Sitz darüber hinaus akustisch feststellbar ist.

Zur Realisierung einwandfrei arbeitender Führungsmittel umfassen nach einer weiteren vorteil haften Ausgestaltung des

Erfindungsgegenstandes die Führungsmittel eine an der Stirnwand des Gehäuses des Einzelschalters angeformte T-förmige Nut und eine dazu korrespondierend ausgebildet T-förmige, an der Seitenwand des Trägergehäuses angeformte Feder. Zur einfachen Anbringung des Einzelschalters an dem Trägergehäuse erstreckt sich die Feder nur über den unteren Bereich der Seitenwand des Trägergehäuses und ist am oberen Ende schräg nach unten abfallend ausgeführt. Weiterhin ist hierbei bevorzugt vorgesehen, daß sich die Nut über annhähernd die gesamte Höhe der Stirnwand des Gehäuses des Einzelschalters erstreckt, und der am Trägergehäuse angebrachte Führungssteg in die Nut eingreift.

Bei einer vorteilhaften Weiterbildung der Erfindung ist am Gehäuse des Einzelschalters ein Zapfen angeordnet, der in eine am Trägergehäuse eingearbeitete Aussparung eingreift. Dies bewirkt eine hohe Verdrehsicherheit des Einzelschalters gegen das Trägergehäuse. Bevorzugt ist die Seitenfläche des Zapfens mit einer Neigung versehen. Hierdurch wird in der Endlage des Einzelschalters eine spielfreie Verbindung sichergestellt.

Durch diese Maßnahmen ergibt sich eine besonders einfache Montage und Demontage der Einzelschalter des Lenkstockschalters an dem Trägergehäuse, wobei im Falle der Demontage nur die obere Schale einer üblichen Lenksäulenverkleidung zu entfernen ist und anschließend lediglich die Klipsverbindung gelöst werden muß. Durch die Anordnung der Feder wird eine Fehlmontage des Einzelschalters insoweit ausgeschlossen, als erst bei einem genügenden Zusammendrücken der Feder ein Einrasten der Klipsverbindung und damit die richtige Positionierung des Einzelschalters am Trägergehäuse erfolgt. Hierbei gewährleisten die Führungsmittel zwischen Einzelschalter und Trägergehäuse eine spielfreie Halterung des Einzelschalters, was im Hinblick auf die beim Schalten wirksamen Kräfte und Momente von Bedeutung ist.

Der der Erfindung zugrundeliegende Gedanke wird in der nachfolgenden Beschreibung anhand eines Ausführungsbeispieles, das in der Zeichnung dargestellt ist, näher erläutert. Es zeigt:

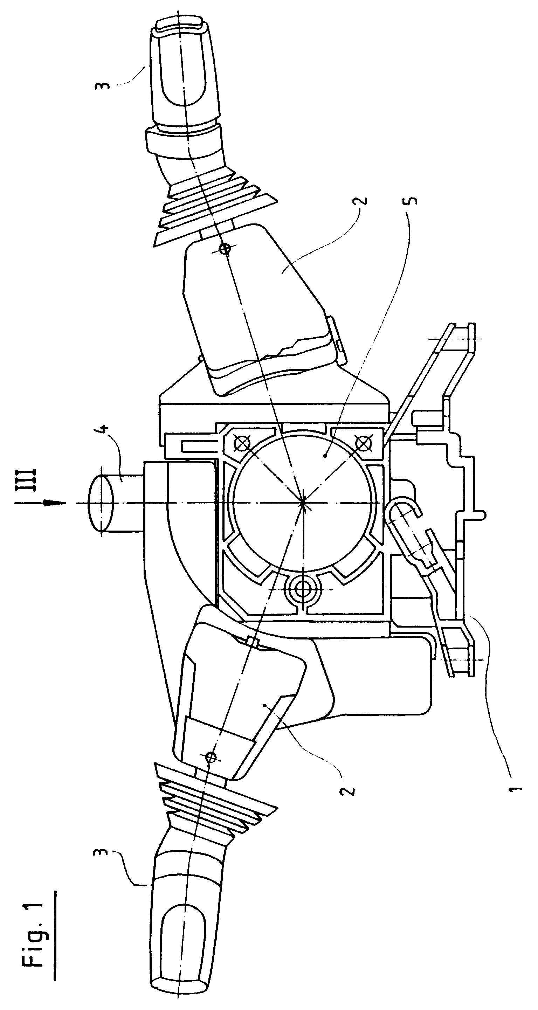

- Fig. 1: eine Gesamtansicht des Lenkstockschalters mit am Trägergehäuse seitlich angeordneten Einzelschaltern,

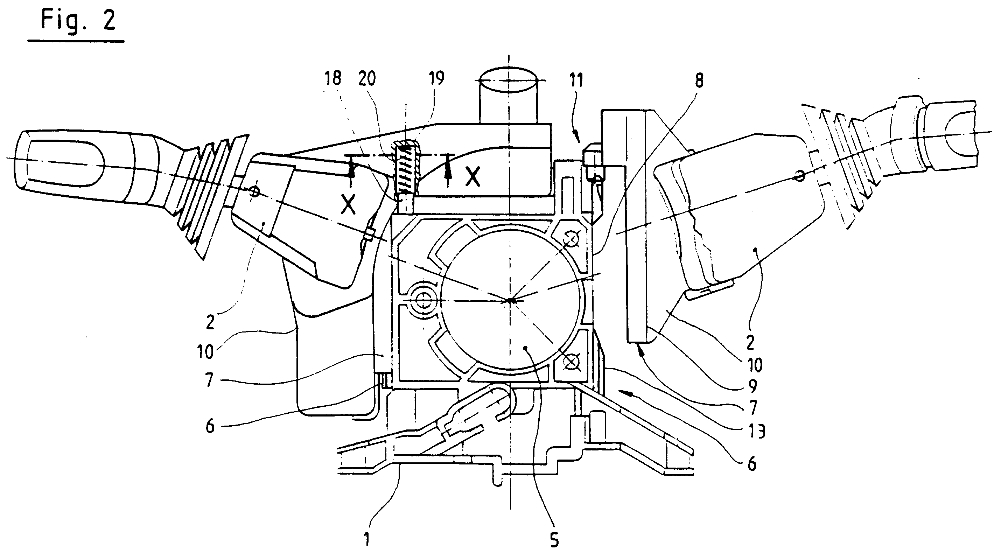

- Fig. 2: die Darstellung nach Fig. 1 mit noch nicht in ihrer Endposition festgelegten Einzelschaltern und mit einem Teilschnitt des linken Einzelschalters,

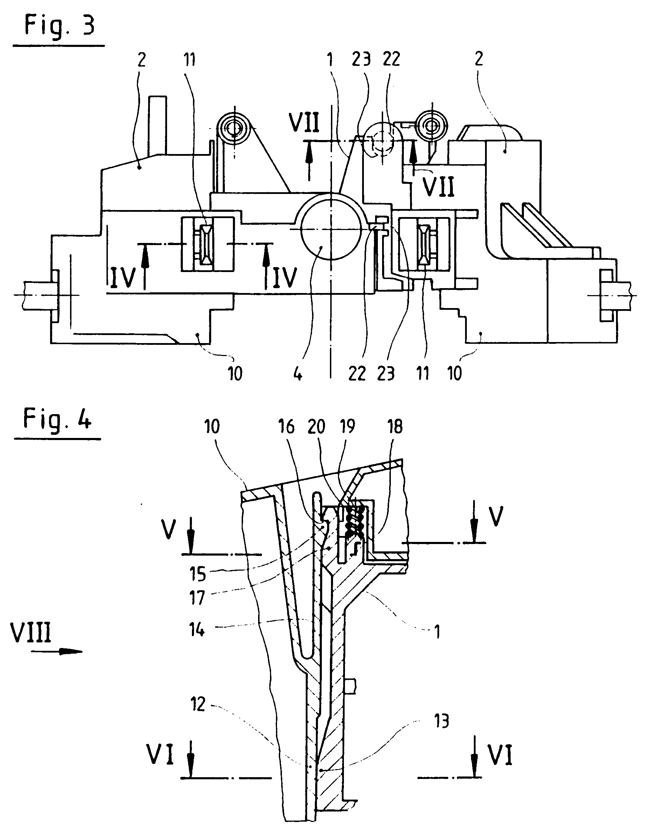

- Fig. 3: eine Draufsicht auf den Lenkstockschalter nach Fig. 1 in Richtung des Pfeiles III,
- Fig. 4: einen Teilschnitt durch die Darstellung nach Fig. 3 gemäß der Linie IV-IV,

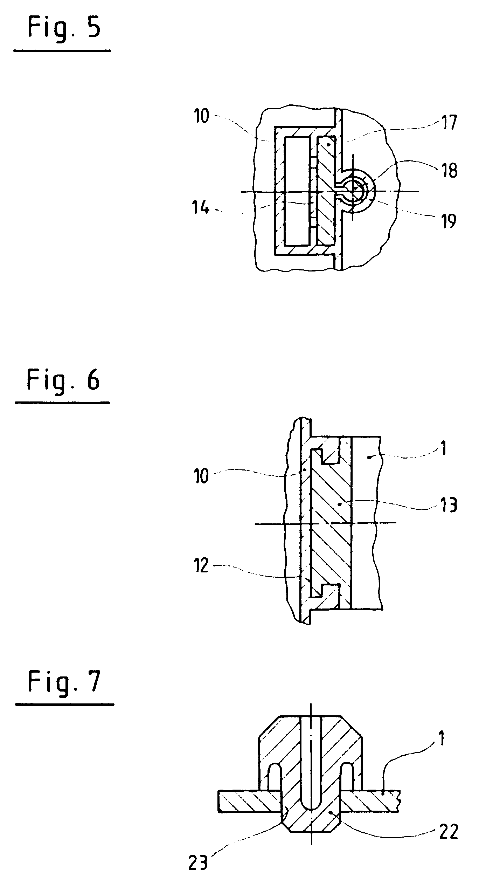

- Fig. 5: einen Schnitt durch die Darstellung nach Fig. 4 gemäß der Linie V-V,
- Fig. 6: einen Schnitt durch die Darstellung nach Fig. 4 gemäß der Linie VI-VI,
- Fig. 7: einen Schnitt durch die Darstellung nach Fig. 3 gemäß der Linie VII-VII,

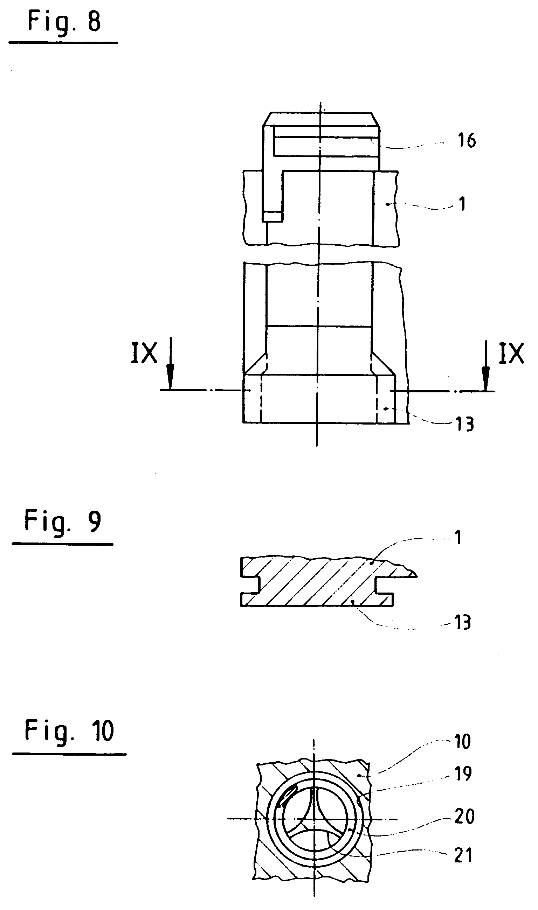

- Fig. 8: eine Ansicht auf die Darstellung nach Fig. 4 in Richtung des Pfeiles VIII,
- Fig. 9: einen Schnitt durch die Darstellung nach Fig. 8 gemäß der Linie XI-XI und
- Fig. 10: einen Schnitt durch die Darstellung nach Fig. 2 gemäß der Linie X-X.

Der Lenkstockschalter umfaßt zwei an einem Trägergehäuse 1 gegenüberliegend angeordnete Einzelschalter 2, von denen jeder durch entsprechende Betätigung eines zugehörigen, als Schalthebel ausgebildeten Betätigungsorgans 3 bestimmte Schaltfunktionen ausführt. In den linken Einzelschalter 2 ist darüber hinaus noch ein Drucktastenschalter 4 zur Betätigung einer Warnlichtblinkanlage integriert. Das Trägergehäuse 1 ist in bekannter Weise über seine Aufnahmeöffnung 5 an einem die Lenksäule eines Kraftfahrzeuges aufnehmenden Mantelrohr befestigt. Die mechanische Verbindung der Einzelschalter 2 mit dem Trägergehäuse 1 erfolgt jeweils durch ineinandergreifende Führungsmittel 6, 7 an der Seitenwand 8 des Trägergehäuses 1 sowie an der Stirnwand 9 des Gehäuses 10 des Einzelschalters 2 und eine zwischen dem Gehäuse 10 des Einzelschalters und dem Trägergehäuse wirkende Klipsverbindung 11. Die ineinandergreifenden Führungsmittel 6, 7 sind als Nut-Feder-Verbindung ausgeführt, wobei die Nut 12 am Gehäuse 10 im Querschnitt T-förmig ausgebildet ist, in die eine dazu im Querschnitt korrespondierende T-förmige Feder 13 am Trägergehäuse 1 eingreift. Die Feder 13 erstreckt sich nur über den unteren Bereich der Seitenwand 8 des Trägergehäuses 1 und ist an ihrem oberen Ende nach unten hin abgeschrägt, während sich die Nut 12 am Gehäuse 10 annähernd über die gesamte Höhe der Seitenwand 9 des Gehäuses 10 erstreckt. Hierdurch wird die Montage bzw. Demontage des Einzelschalters 2 erleichtert.

Die Klipsverbindung 11 umfaßt einen am Gehäuse 10 des Einzelschalters 2 angeformten, federnden Klipsarm 14 mit einer Klipsnase 15, die hinter eine entsprechende Schulter 16 eines in die Nut 12 des Gehäuses 10 eingreifenden Führungssteges 17 am Trägergehäuse 1 einrastet. Hinter dem Führungssteg 17 befindet sich am Trägergehäuse 1 ein Ansatz 18, auf dem sich eine in einem Sackloch 19 des Gehäuses 10 befestigte, als Druckfeder ausgebildete Feder 20 abstützt. Am Boden des Sackloches 19 ist ein Nippel 21 angespritzt, der sternförmig gestaltet ist und die Feder 20 gegen ein Herausfallen sichert, in dem die Feder 20 auf den Nippel 21 mit Preßsitz gesteckt wird.

Beim Herstellen der Verbindung zwischen einem Einzelschalter 2 und dem Trägergehäuse 1 wird die Feder 20 solange zusammengedrückt, bis die Klipsverbindung 11 durch ein hörbares Einrasten der Klipsnase 15 hinter die Schulter 16 hergestellt ist. Durch die Feder 20 ist damit eine spielfreie Klipsverbindung 11 sichergestellt. Bei der Demontage eines Einzelschalters 2 von dem Trägergehäuse 1 wird durch Verschwenken des Klipsarmes 14 die Klipsnase 15 aus ihrer Raststellung ohne Zuhilfenahme eines Werkzeuges gelöst, wodurch die gespannte Feder 20 den Einzelschalter 2 um ein entsprechendes Maß nach oben drückt. Dieser läßt sich sodann in einfacher Weise von dem Trägergehäuse 1 abheben.

Damit die Führungsmittel 6, 7 und die Klipsverbindung 11 von Verdrehkräften entlastet werden, greift ein am Gehäuse 10 des jeweiligen Einzelschalters 2 angeformter Zapfen 22 in eine zugehörige Aussparung 23 des Trägergehäuses 1 ein.

Die in der vorstehenden Beschreibung, den Zeichnungen sowie den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Lenkstockschalter für Kraftfahrzeuge, der am Ende eines die Lenksäule aufnehmenden Mantelrohres angeordnet ist und mehrere, je aus einem Gehäuse (10) mit elektrischen Anschlüssen und einem Betätigungsorgan (3) bestehende Einzelschalter (2) aufweist, die an einem mit dem Mantelrohr verbundenen Trägergehäuse (1) befestigbar sind, wobei jeder Einzelschalter (2) in tangentialer Richtung gegen die Kraft eines federnden Klipsarmes (14) einer lösbaren Klipsverbindung (11) unter dem Zusammenspiel entsprechender Führungsmittel (6, 7) auf das Trägergehäuse (1) aufsteckbar ist, dadurch gekennzeichnet, daß zusätzlich zum Klipsarm (14) eine Feder (20) vorgesehen ist, die in zum Mantelrohr tangentialer Richtung wirkt.

2. Lenkstockschalter nach Anspruch 1, dadurch gekennzeichnet, daß die Feder (20) eine Schraubenfeder ist und in ein Sackloch (19) im Gehäuse (10) des Einzelschalter (2) eingesetzt ist.

3. Lenkstockschalter nach den Ansprüchen 1 und 2, dadurch gekennzeichnet, daß am Boden des Sackloches (19) ein sternförmiger Nippel (21) angespritzt ist, auf den die Feder (20) klemmend aufgesteckt ist.

4. Lenkstockschalter nach einem der Ansprüche 1 bis 3, dadurch gekennzeichnet, daß der Feder (20) im Einzelschalter (2) axial ein stumpfförmiger Ansatz (18) am Trägergehäuse (1) gegenübersteht und dieser beim Herstellen der Klipsverbindung (11) die Feder (20) zusammendrückt.

5. Lenkstockschalter nach einem der Ansprüche 1 bis 4, dadurch gekennzeichnet, daß der federnde Klipsarm (14) der Klipsverbindung (11) eine Klipsnase (15) aufweist, die hörbar hinter eine Schulter (16) eines Führungssteges (17) am Trägergehäuse (1) einrastet.

6. Lenkstockschalter nach einem der Ansprüche 1 bis 5, dadurch gekennzeichnet, daß die Führungsmittel (6, 7) eine an der Stirnwand (9) des Gehäuses (10) des Einzelschalters (2) angeformte T-förmige Nut (12) und eine dazu korrespondierend ausgebildete T-förmige, an der Seitenwand des Trägergehäuses (1) angeformte Feder (13) umfassen.

7. Lenkstockschalter nach einem der Ansprüche 1 bis 6, dadurch gekennzeichnet, daß sich die Feder (13) nur über den unteren Bereich der Seitenwand (8) des Trägergehäuses (1) erstreckt und am oberen Ende schräg nach unten abfallend ausgeführt ist.

8. Lenkstockschalter nach einem der Ansprüche 1 bis 7, dadurch gekennzeichnet, daß sich die Nut (12) über annähernd die gesamte Höhe der Stirnwand (9) des Gehäuses (10) des Einzelschalters (2) erstreckt, und der am Trägergehäuse (1) angebrachte Führungssteg (17) in die Nut (12) eingreift.

9. Lenkstockschalter nach einem der Ansprüche 1 bis 8, dadurch gekennzeichnet, daß am Gehäuse (10) des Einzelschalters (2) ein Zapfen (12) angeordnet ist, der in eine am Trägergehäuse (1) eingearbeitete Aussparung (23) eingreift.

10. Lenkstockschalter nach einem der Ansprüche 1 bis 9, dadurch gekennzeichnet, daß die Seitenfläche des Zapfens (22) mit einer Neigung versehen ist.

## Claims

1. Steering column switch for automotive vehicles, which switch is disposed on the end of a tubular casing accommodating the steering column and includes a plurality of individual switches (2), which each comprise a housing (10) with electrical connections and an actuating member (3) and are securable on a carrier housing (1) connected to the tubular casing, each individual switch (2) being mountable on the carrier housing (1) in the tangential direction in opposition to the force of a resilient clip-in arm (14) of a detachable clip-in connection (11) by the interplay between appropriate guide means (6, 7), characterised in that, in addition to the clip-in arm (14), a spring (20) is provided, which acts in a direction which is tangential relative to the tubular casing.

2. Steering column switch according to claim 1, characterised in that the spring (20) is a helical spring and is inserted into a blind bore (19) in the housing (10) of the individual switch (2).

3. Steering column switch according to claims 1 and 2, characterised in that a star-shaped nipple (21) is moulded on the base of the blind bore (19), and the spring (20) is clampingly mounted on said nipple.

4. Steering column switch according to one of claims 1 to 3, characterised in that a truncated extension member (18) on the carrier housing (1) is situated axially opposite the spring (20) in the individual switch (2), and said extension member compresses the spring (20) during the establishment of the clip-in connection (11).

5. Steering column switch according to one of claims 1 to 4, characterised in that the resilient clip-in arm (14) of the clip-in connection (11) includes a clip-in projection (15), which audibly locks in position behind a shoulder (16) of a guide web (17) on the carrier housing (1).

6. Steering column switch according to one of claims 1 to 5, characterised in that the guide means (6, 7) include a T-shaped groove (12), which is moulded in the end wall (9) of the housing (10) of the individual switch (2), and a T-shaped spring (13), which is configured to correspond with said groove and is moulded on the lateral wall of the carrier housing (1).

7. Steering column switch according to one of claims 1 to 6, characterised in that the spring (13) extends only over the lower region of the lateral wall (8) of the carrier housing (1) and is configured to descend in a downwardly inclined manner at the upper end.

8. Steering column switch according to one of claims 1 to 7, characterised in that the groove (12) extends over approximately the entire height of the end wall (9) of the housing (10) of the individual switch (2), and the guide web (17), which is attached to the carrier housing (1), engages in the groove (12).

9. Steering column switch according to one of claims 1 to 8, characterised in that a pin (22) is disposed on the housing (10) of the individual switch (2) and engages in a recess (23) formed in the carrier housing (1).

10. Steering column switch according to one of claims 1 to 9, characterised in that the lateral face of the pin (22) is provided with an inclination.

## Revendications

1. Commutateur de colonne de direction pour véhicule automobile, qui est placé à l'extrémité d'un tube d'enveloppe recevant la colonne de direction, et comprend plusieurs commutateurs individuels (2) constitués chacun par un boîtier (10) avec des bornes électriques et un organe d'actionnement (3), qui peuvent être fixés sur un boîtier de support (1) relié au tube d'enveloppe, chaque commutateur individuel (2) pouvant être emboîté sur le boîtier de support (1) suivant une direction tangentielle à l'encontre de la force d'un bras de clipsage formant ressort (14) d'un assemblage clipsé amovible (11), par coopération de moyens de guidage correspondants (6,7), caractérisé en ce qu'en supplément au bras de clipsage (14) il est prévu un ressort (20) qui agit suivant une direction tangentielle au tube d'enveloppe.

2. Commutateur de colonne de direction selon la revendication 1, caractérisé en ce que le ressort (20) est un ressort hélicoïdal et est placé dans un trou borgne (19) dans le boîtier (10) du commutateur individuel (2).

3. Commutateur de colonne de direction selon les revendications 1 et 2, caractérisé en ce que sur le fond du trou borgne (19) est moulé par injection un nipple (21) en forme d'étoile, sur lequel est enfiché par serrage le ressort (20).

4. Commutateur de colonne de direction selon l'une des revendications 1 à 3, caractérisé en ce qu'au ressort (20) fait face axialement dans le commutateur individuel (2), un appendice (18) en forme de moignon, sur le boîtier de support (1) et celui-ci comprime le ressort (20) lors de la réalisation de l'assemblage clipsé (11).

5. Commutateur de colonne de direction selon l'une des revendications 1 à 4, caractérisé en ce que le bras de clipsage formant ressort (14) de l'assemblage clipsé (11) présente un ergot de clipsage (15), qui s'accroche de manière audible derrière un épaulement (16) d'une nervure de guidage (17) sur le boitier de support (1).

6. Commutateur de colonne de direction selon l'une des revendications 1 à 5, caractérisé en ce que les moyens de guidage (6, 7) comprennent une rainure en T (12) formée sur la paroi frontale (9) du boîtier (10) du commutateur individuel (2) et une languette en T (13) de forme correspondante, formée sur la paroi latérale du boîtier de support (1).

7. Commutateur de colonne de direction selon l'une des revendications 1 à 6, caractérisé en ce que la languette (13) s'étend uniquement sur la zone inférieure de la paroi latérale (8) du boîtier de support (1) et descend obliquement vers le bas à l extrémité supérieure.

8. Commutateur de colonne de direction selon l'une des revendications 1 à 7, caractérisé en ce que la rainure (12) s'étend sur à peu près toute la hauteur de la paroi frontale (9) du boitier (10) du commutateur individuel (2), et la nervure de guidage (17), placée sur le boîtier de support (1), s'engage dans la rainure (12).

9. Commutateur de colonne de direction selon l'une des revendications 1 à 8, caractérisé en ce que sur le boîtier (10) du commutateur individuel (2) est placé un tenon (22), qui s'engage dans un évidement (23), pratiqué sur le boîtier de support (1).

10. Commutateur de colonne de direction selon l'une des revendications 1 à 9, caractérisé en ce que la face latérale du tenon (22) est pourvue d'une pente.
